# EUROPÄISCHE PATENTSCHRIFT

(11) **EP 2 569 203 B1**
(45) Veröffentlichungstag und Bekanntmachung des Hinweises auf die Patenterteilung: **09.03.2016**
(21) Anmeldenummer: 11724121.6
(22) Anmeldetag: 10.05.2011
(51) Int. Cl.: B60N 2/02, B60N 2/24, B62D 1/19, B60N 2/42, B60N 2/427, F16F 13/30

(54) **REGELVERFAHREN FÜR EINEN ENERGIEABSORBER**
REGULATING METHOD FOR AN ENERGY ABSORBER
PROCÉDÉ DE RÉGULATION POUR UN DISPOSITIF ABSORBANT L'ÉNERGIE

(30) Priorität: 10.05.2010 DE 102010020086
(43) Veröffentlichungstag der Anmeldung: 20.03.2013
(73) Patentinhaber: Inventus Engineering GmbH, 6771 St. Anton i. M. (AT)
(72) Erfinder: BATTLOGG, Stefan, A-6771 St. Anton i. M. (AT); PÖSEL, Jürgen, A-6700 Bludenz (AT); ELSENSOHN, Gernot, A-6771 St. Anton i.M. (AT)
(74) Vertreter: Lenzing Gerber Stute
(86) Internationale Anmeldenummer: PCT/EP2011/002327
(87) Internationale Veröffentlichungsnummer: WO 2011/141164

(56) Entgegenhaltungen:
- EP-A1- 1 060 974
- EP-A2- 0 979 768
- WO-A1-2007/068436
- DE-T2- 69 621 138
- US-A1- 2004 046 377
- US-A1- 2006 118 370
- US-B1- 6 279 952

## Beschreibung

Die vorliegende Erfindung betrifft ein Verfahren zur Regelung eines Energieabsorbers mit den Merkmalen des Oberbegriffs des Anspruchs 1.

Weiter betrifft die Erfindung eine Vorrichtung mit den Merkmalen des Oberbegriffs des Anspruchs 18.

Das generelle technische Gebiet, mit dem sich die vorliegende Erfindung befasst, ist die Verzögerung von bewegten Massen innerhalb eines definierten Verfahrweges, wobei die auf die Massen wirkenden Kräfte möglichst klein sein sollen. Dabei sind der Verzögerungseinrichtung - dem Energieabsorber - weder Masse noch Aufprallgeschwindigkeit bekannt. Dies soll nachfolgend am Beispiel des Fahrers eines Kraftfahrzeugs bei einem Unfall erläutert werden. Der Begriff "Verzögerung" bedeutet eine Geschwindigkeitsänderung mit abnehmendem Betrag der Geschwindigkeit. Der Begriff "Beschleunigung" beschreibt eine Geschwindigkeitsänderung mit abnehmendem oder zunehmendem Betrag der Geschwindigkeit. Der Begriff "Verzögerung" ist für den beschriebenen Fall eines Aufpralls eines Fahrzeugs auf ein langsames oder stehendes Hindernis zutreffend. Da es im vorliegenden Zusammenhang hauptsächlich um eine Minimierung der auf Personen oder Gegenstände wirkenden Kräfte geht, ist im Allgemeinen der Begriff "Beschleunigung" zu bevorzugen.

Bei einem Aufprall in Fahrtrichtung wird ein Fahrzeug hohen Verzögerungskräften ausgesetzt. Beispielsweise kann bei einem Frontalaufprall auf ein festes Hindernis eine Verzögerung von 50 km/h zum Stillstand in einer Wegstrecke von einem Meter erfolgen, die dem zur Verfügung stehenden Verformungsweg des Kraftfahrzeugs entspricht. In gleicher Weise wird auch der Fahrer des Kraftfahrzeugs von der Ausgangsgeschwindigkeit auf eine Geschwindigkeit 0 verzögert. Die derzeit verwendeten Sicherheitssysteme in Kraftfahrzeugen wie Sicherheitsgurt, Airbags und verfahrbare Lenksäule sollen dafür sorgen, dass die Verzögerung des Fahrers möglichst gleichförmig erfolgt und dass Beschleunigungsspitzenwerte vermieden werden.

Es wird allgemein davon ausgegangen, dass bei Verzögerungen von mehr als 50 g die Auswirkungen auf einen menschlichen Körper so groß sind, dass ein entsprechender Aufprall zu tödlichen Verletzungen führt. Dies gilt insbesondere für den Kopf- und Oberkörperbereich. Es werden deshalb zahlreiche technische Lösungen vorgeschlagen und auch eingesetzt, um diese Beschleunigungsbelastungen während eines Unfalls zu minimieren. Derzeitige technische Systeme sind aber bestenfalls mehrstufig schaltbar, zum Beispiel um zwischen "angegurtet" und "nicht angegurtet" unterscheiden zu können und auf einen "Normcrash" ausgelegt. Das heißt die Kräfte der Verzögerungseinrichtungen sind üblicherweise so ausgelegt, dass ein Mann, der in etwa dem Bevölkerungsdurchschnitt entspricht, bei einer genau definierten Unfallsituation (Unfallart, Aufprallgeschwindigkeit, Überdeckung...) möglichst geringe Belastungen erfährt.

Problematisch dabei ist, dass zum Beispiel eine wesentlich leichtere Frau in der gleichen Unfallsituation deutlich höheren Belastungen ausgesetzt wird als der zuvor beschriebene Mann, da sie bei gleichbleibender Bremskraft F stärker verzögert wird, also eine höhere Beschleunigung a erfährt (F = m * a). Ist am gleichen Unfall aber eine wesentlich schwerere Person beteiligt, dann reicht die Bremskraft womöglich nicht aus, um die Person vollständig zu verzögern und die am Ende des Verfahrwegs verbleibende Bewegungsenergie wird in einem kurzen, aber umso höheren Kraftimpuls am Anschlag umgewandelt, was das Verletzungsrisiko deutlich erhöht.

Zur Verbesserung der Ansteuerbarkeit der Energieabsorption werden in der WO 2007002970 und der WO 2007068436 technische Lösungen vorgeschlagen, bei denen beim Zusammenschieben der Lenksäule nach Art eines Dämpfers ein Kolben auf eine Kammer mit einer magnetorheologischen Flüssigkeit (MRF) drückt. Die magnetorheologische Flüssigkeit wird durch ein entsprechend elektrisch ansteuerbares Ventil gedrückt, das durch sein veränderliches Magnetfeld die Viskosität der magnetorheologischen Flüssigkeit bzw. der Schubspannung und damit die Widerstandskraft gegen die Bewegung des Kolbens verändert. Dieses Konstruktionselement bietet die Möglichkeit, durch Ansteuerung einer elektromagnetischen Spule im Moment des Aufpralls die Magnetisierung der magnetorheologischen Flüssigkeit zu variieren und damit das Dämpfungsverhalten des Dämpfungsglieds einzustellen. Dieser Vorgang ist reversibel. Die Regelgeschwindigkeit und die Einstellgeschwindigkeit der Dämpfungseigenschaften liegt hier im Bereich von deutlich weniger als 10ms, was ausreichend schnell ist, um während der Dauer eines Aufpralls, die im Mittel 30 bis 100 Millisekunden beträgt, mehrfach regelnd eingreifen zu können. Ein geeignetes Regelverfahren wird in diesen Druckschriften jedoch nicht vorgeschlagen.

Ein solches Verfahren für einen hydraulischen Dämpfer wird in der Druckschrift DE 60009208 T2 vorgeschlagen. Auch hier wird zunächst eine Lenksäule zu Grunde gelegt, die entlang eines Verformungsweges in Axialrichtung verfahrbar und zusätzlich verschwenkbar ist. Es wird unter anderem ein durch Magnetfelder steuerbarer magnetorheologischer Dämpfer vorgeschlagen, der während eines Aufpralls hinsichtlich seiner Dämpfungseigenschaften über ein elektrisch erzeugtes Magnetfeld regelbar ist. Das Verfahren sieht jedoch vor, dass die auf den Fahrzeuginsassen wirkende Beschleunigung durch die Dämpfung der Lenksäule derart geregelt wird, dass bestimmte vorgegebene Beschleunigungswerte nicht überschritten werden. So kann beispielsweise über Beschleunigungssensoren, die dem Lenkrad zugeordnet sind, die Beschleunigung gemessen werden und beispielsweise auf 25 g begrenzt werden, was in vielen Fällen zur Vermeidung von tödlichen Verletzungen ausreichend ist.

Gegenüber dem Stand der Technik stellt dieses Verfahren eine Verbesserung dar, es weist jedoch trotz teilweise aufwendiger Sensorik Schwachstellen auf. So ist beispielsweise durch einen Beschleunigungsaufnehmer am Lenkrad die absolute Verzögerung (= relativ zum Bezugssystem "Erde") des Fahrers feststellbar und sind möglicherweise Parameter wie Aufprallgeschwindigkeit und - vektor bekannt, das für den Insassen entscheidende Bezugssystem "Karosserie" wird jedoch nicht erfasst. Und gerade für den Fahrer ist die Relativbewegung zur Karosserie entscheidend, beispielsweise wenn der Fahrer durch die Lenksäule auf die absolute Geschwindigkeit 0 verzögert wird, die Karosserie aber noch in Bewegung ist.

Hier ist nun Aufgabe der vorliegenden Erfindung, ein Regelverfahren für einen hydraulischen Energieabsorber auf Basis einer magnetorheologischen Flüssigkeit zu schaffen, mit dem die Belastung auf die zu verzögernde Einheit minimiert wird. Das erfindungsgemäße Verfahren zeichnet sich dadurch aus, dass innerhalb der Systemgrenzen:
- stets der gesamte zur Verfügung stehende Verfahrweg zur Verzögerung verwendet wird,
- am Ende des Verfahrweges die Relativgeschwindigkeit annähernd 0 ist oder einen bestimmten Grenzwert nicht überschreitet,
- die Verzögerung möglichst konstant verläuft (keine Kraftimpulse),
- die Verzögerung einen möglichst niedrigen Wert annimmt
- und die Regelung unabhängig von der Masse und der Anfangsgeschwindigkeit der zu verzögernden Einheit funktioniert.

Diese Aufgabe wird mit einem Verfahren mit den Merkmalen des Anspruchs 1 gelöst. Weitere Vorteile des erfindungsgemäßen Verfahrens werden in den Ausführungsbeispielen und den Unteransprüchen dargestellt.

Das Verfahren setzt einen Energieabsorber voraus, dessen erstes bewegliches Ende direkt oder über mechanische Hilfsmittel mit der zu verzögernden Einheit verbunden ist bzw. auf das die Einheit aufschlägt und dessen zweites Ende fest mit dem Referenzsystem verbunden ist, gegenüber dem die Einheit verzögert wird. Die Relativgeschwindigkeit, mit der sich beide Enden des Energieabsorbers zueinander bewegen, wird kontinuierlich oder in Intervallen erfasst und die für einen Stillstand am Ende des Verfahrweges erforderliche Beschleunigung (in den meisten Fällen bedeutet dies eine Verzögerung) berechnet. Aus dieser berechneten erforderlichen Beschleunigung generiert ein Regler den Ansteuerstrom für die mindestens eine Spule des Energieabsorbers, so dass über das Magnetfeld der Spule die Viskosität der magnetorheologischen Flüssigkeit so verändert wird, dass die berechnete erforderliche Beschleunigung zumindest annähernd erreicht wird. Dadurch wird unabhängig von der Masse der zu verzögernden Einheit oder anderen Parametern die Relativgeschwindigkeit bis zum Ende des Kompressionsweges auf annähernd 0 oder unter einen bestimmten Grenzwert verringert, wodurch hartes Aufschlagen und dadurch resultierende Beschleunigungsspitzen vermieden werden.

Der Begriff "begrenzter Verfahrweg" ist in der vorliegenden Beschreibung und den Patentansprüchen nicht auf lineare Bewegungen beschränkt, sondern umfasst auch begrenzte Drehbewegungen und Schwenkbewegungen sowie andere nicht gerade Verfahrwege.

Der Regler kennt die momentane Relativgeschwindigkeit und den verbleibenden Restweg, daraus lässt sich einfach die optimale Verzögerung berechnen, mit der die bewegte Einheit am Ende des Verfahrweges still stehen würde. Diese Berechnung kann kontinuierlich oder in bestimmten Intervallen erfolgen. Aus diesem Verzögerungswert berechnet der Regler die Gegenkraft, die über den Spulenstrom eingestellt werden kann.

Möglich ist auch, dass der Regler anfangs aus der Startgeschwindigkeit und dem Verzögerungsweg das Geschwindigkeitsprofil errechnet, nach welchem die Geschwindigkeit zeit- oder wegabhängig verlaufen muss, um am Wegende 0 zu erreichen. Im Verlauf der Bewegung passt der Regler die Gegenkraft des Energieabsorbers so an, dass Soll- und Istgeschwindigkeit übereinstimmen.

Es ist denkbar, dass das Geschwindigkeitsprofil im Bewegungsverlauf abhängig von Zeit, Weg oder sonstigen Parametern aktualisiert, also neu berechnet wird.

Da die Verzögerung auch von der Masse der bewegten Einheit abhängt, muss der Regler diesen Einfluss kompensieren. Ist die Masse schon bekannt, kann der Regler optimal ausgelegt werden. Aber auch ohne die Masse zu kennen, kann der Regler über einen großen Bereich gute Resultate liefern, was ein Vorteil dieses Verfahrens ist. Abhängig von der Anwendung und dem geforderten Massebereich kann es vorteilhaft sein, während der Verzögerung aus dem Verhältnis der erzeugten Gegenkraft und der erreichten Verzögerung auf die bewegte Masse zu schließen und die Regelparameter anzupassen.

Das erfindungsgemäße Verfahren erlaubt es, eine Masse mit der kleinstmöglichen Beschleunigung, also der geringsten Gegenkraft, unter den gegebenen Umständen (Bremsweg, Masse, Geschwindigkeit) aus der relativen Bewegung zu stoppen. Die vorhandene kinetische Energie wird dabei über den gesamten möglichen Verfahrweg möglichst konstant umgewandelt.

Es ist möglich, dass andere Regelverfahren nach dem Stand der Technik beispielsweise durch eine Begrenzung der maximal zulässigen Beschleunigung während der Bewegung eine kleinere Belastung auf die zu verzögernde Einheit ausüben, jedoch wird in diesem Fall nicht die gesamte kinetische Energie umgewandelt und es verbleibt eine Restgeschwindigkeit. Diese wird üblicherweise am Anschlag in einer kurzen Zeit bzw. Wegstrecke auf einem hohen Kraftniveau umgewandelt, mit möglichen Schadensfolgen je nach Art der zu verzögernder Einheit.

Eine Anwendung kann beispielsweise der Minenschutz von Fahrzeugen sein, wo das erfindungsgemäße Verfahren mit Energieabsorbern zwischen Sitzgestellen und Karosserie das Verletzungsrisiko bzw. den Schweregrad der Verletzungen für Fahrer und Passagiere bei einer Explosion unter dem Fahrzeugboden senkt. Im gleichen Fahrzeug kann das Verfahren aber auch angewendet werden, um wichtige Komponenten wie elektronische Systeme vor Beschädigung zu schützen und auch im Angriffsfall einsatzbereit zu halten.

Je nach Anwendung kann der Energieabsorber für den einmaligen Gebrauch konzipiert werden oder beispielsweise für die Mehrfachanwendung als selbstrückstellender Dämpfer ausgeführt werden. Beim Minenschutz kann so beispielsweise zuerst die Beschleunigung durch die Explosion (z.B. vertikales Hochschleudern) und anschließend der Aufprall des Fahrzeuges auf die Straße (z.B. freier Fall) gedämpft werden.

Ebenso ist die Anwendung des Verfahrens beispielsweise an einem Schleusentor möglich, um es über einen Rammschutz mit Energieabsorber vor Beschädigungen durch auflaufende Boote zu schützen. Geschwindigkeit und bewegte Masse sind wieder unbekannt und unterscheiden sich deutlich von den bisherigen Anwendungsbeispielen. Aber auch in diesem Fall können durch das erfindungsgemäße Verfahren die wirkenden Kräfte minimiert und somit die Schadensfolgen möglichst gering gehalten werden. Hierfür ist der Energieabsorber so konstruiert, dass er vielmals eingesetzt werden kann.

Gegenüber bestehenden Verfahren und Konstruktionen zur Energieabsorption arbeitet das erfindungsgemäße Verfahren über einen weiten Dynamikbereich (Anfangsgeschwindigkeit, Masse, Bremsweg) ohne die Ausgangsgrößen Masse und Anfangsgeschwindigkeit zu kennen.

Dabei ist das Verfahren mit vergleichsweise geringem Aufwand umsetzbar.

Als Eingangsgröße benötigt ein Regler nach vorliegendem Verfahren lediglich die Relativbewegung zwischen bewegtem und ruhendem Teil des Energieabsorbers. Verschiedene Verfahren zur direkten oder indirekten Bestimmung von Position, Weg, Geschwindigkeit oder Beschleunigung können angewendet werden, solange sich die benötigten Größen aus diesen errechnen lassen. In weiterer Folge wird das Verfahren anhand eines Wegsensors beschrieben, es können aber ausdrücklich auch andere Sensoren eingesetzt werden.

Bei dem Sensor handelt es sich vorzugsweise um einen digitalen Wegsensor, so dass jede Wegänderung unmittelbar und ohne Rechenaufwand erfasst werden kann. Dadurch kann beispielsweise gegenüber einem potentiometrischen Wegsensor auf einen A/D-Wandler zur Signalwandlung verzichtet werden.

Erfindungsgemäss ist vorgesehen, dass sowohl im bewegbaren Teil als auch im feststehenden Teil des Systems Beschleunigungssensoren befestigt sind, wobei aus der Differenz der erfassten Beschleunigungen während des Aufpralls der Weg und die Relativgeschwindigkeit errechnet werden kann. Dieses Verfahren ist aufwendiger, kann durch die Integration der Beschleunigung jedoch rauschärmere Geschwindigkeits- und Wegwerte bieten (durch Ableiten eines Wegsignals wird das Rauschen verstärkt). Möglich ist es auch, mehrere verschiedene Sensoren zu verwenden.

Vorzugsweise wird ein Wegsensor eingesetzt, der die lineare Bewegung in eine Drehbewegung wandelt und der beispielsweise als optischer Encoder oder als magnetischer Drehgeber ausgelegt ist. Magnetische Drehgeber sind insbesondere in Kraftfahrzeugen seit Langem erprobt, beispielsweise in Antiblockiersystemen zu Erfassung der Raddrehzahl. Die Umwandlung der linearen Bewegung in eine Rotation kann durch den Sensor selbst bzw. durch geeignete mechanische Hilfsmittel erfolgen. Auch hier können verschiedene Messprinzipien und Sensortechnologien zum Einsatz kommen.

Das erfindungsgemäße Verfahren ist nicht auf Linearbewegungen beschränkt. Entsprechend der Anwendung, beispielsweise bei der Verzögerung einer Drehbewegung, können bevorzugt rotativ wirkende Sensoren verwendet werden. Eine solche Drehbewegung kann beispielsweise in einem Gurtaufroller bei Sicherheitsgurten in Fahrzeugen vorkommen.

Denkbar ist auch der Einsatz von magneto-induktiven Sensoren, Wirbelstromsensoren, Laser oder Radio Detection and Ranging (Radar) zur Abstandsmessung. Verschiedene Verfahren zur direkten oder indirekten Bestimmung von Weg, Position, Geschwindigkeit oder Beschleunigung können eingesetzt werden, es ist auch jede Kombination von gleichen oder verschiedenen Messverfahren möglich. Beispielsweise kann über zwei an unterschiedlichen Komponenten befestigte Beschleunigungsaufnehmer die Differenzbeschleunigung bestimmt werden.

Für die Regelung ist es möglich den Sensor nicht mit einer fixen Abtastfrequenz auszulesen sondern die Abtast- und / oder Regelfrequenz auf die tatsächliche Verfahrgeschwindigkeit anzupassen. Das kann soweit ausgebaut werden, bis der Regler nicht mehr zeitsynchron sondern weggesteuert arbeitet. Dazu triggert jeder Wegschritt bzw. ein Vielfaches jeden Wegschritts des (digitalen) Wegsensors einen Regelzyklus, die Zeit zwischen den Wegschritten ermöglicht die Berechnung von Geschwindigkeit und Beschleunigung. Wesentlicher Vorteil dieses Verfahrens ist, dass die Auflösung des Wegsensors verhältnismäßig grob sein kann, was die Serienumsetzung aufgrund geringerer Herstellkosten erleichtert. Die zeitliche Auflösung der prozessorinternen Zeit lässt sich sehr einfach variieren und bei Bedarf verhältnismäßig günstig vergrößern, z.B. durch eine höhere Taktfrequenz des Prozessors.

Die Auflösung des Sensors muss nicht über den gesamten Verfahrweg konstant sein, sie kann diskret oder kontinuierlich verändert werden. So kann eine hohe Verfahrgeschwindigkeit am Anfang und eine hohe Auflösung (bei langsamer Verfahrgeschwindigkeit) gegen Ende des Verfahrweges einfach umgesetzt werden.

Das ganze erfindungsgemäße Verfahren kann also mit nur einem Sensor umgesetzt werden, wobei der entsprechende Sensor vergleichsweise einfach, robust und kostengünstig umgesetzt werden kann. Weitere Sensoren oder Schnittstellen zu vorhandenen Steuergeräten sind nicht erforderlich.

Je nach Anwendung kann die Einbindung in bestehende Sicherheitssysteme vorteilhaft sein. Das kann einerseits die Kommunikation mit bestehenden Steuergeräten und Sensoren sein, andererseits kann das erfindungsgemäße Verfahren mit vergleichsweise kleinem Aufwand in bestehende Steuergeräte implementiert werden. Beispielsweise kann das Verfahren zur Regelung eines Energieabsorbers in der Lenksäule eines KFZ in einem bestehenden Airbagsteuergerät umgesetzt werden. Dieses hat nach Auslösen des Airbags üblicherweise keine weitere Aufgabe und kann so seine Sensoren und Rechenleistung sinnvoll weiter zu Verfügung stellen.

Ein elektronisches System ist zur Regelung der Energieabsorption erforderlich. Dieses System umfasst einerseits einen Mikrocontroller, der zur Berechnung der Regelgröße aus den Sensorsignalen geeignet programmiert ist, und zum Anderen eine Leistungselektronik, die den Spulenstrom so regelt, dass die berechneten Verzögerungswerte zumindest annähernd erreicht werden. Das erfindungsgemäße Verfahren kann in unterschiedlicher Hardware wie Mikrocontroller, CPLD, FPGA, ASIC... implementiert werden oder als Hardware, beispielsweise diskret aufgebaut, ausgeführt sein.

Im Energieabsorber kann vorgesehen sein, dass die magnetorheologische Flüssigkeit durch einen Permanentmagneten mit einem Magnetfeld beaufschlagt wird, das einer mittleren Dämpfungskraft entspricht. Die Leistungselektronik muss dann über die Spule gegebenenfalls ein verstärkendes oder ein schwächendes Magnetfeld aufbauen, um die Dämpfung den Anforderungen anzupassen. Es muss nicht das gesamte Magnetfeld elektrisch erzeugt werden. Im Fehlerfall ist durch das Permanentmagnetfeld noch eine mittlere Dämpfung gegeben, wodurch eine definierte Notlauffunktion einstellbar ist, deren Kraftverlauf im Wesentlichen einem herkömmlichen System nach dem Stand der Technik entspricht.

In üblichen Anwendungen kann es vorgesehen sein, dass sich die Elektronik während des normalen Betriebs in einem Ruhezustand befindet und nur im Einsatzfall überhaupt aktiviert wird, beispielsweise wenn ein Trigger den bevorstehenden Aufprall meldet. Dabei kann die Elektronik im Normalbetrieb auch zusätzliche Aufgaben übernehmen, beispielsweise die Selbstüberprüfung, Kommunikation mit Sensoren und dergleichen und auch nach dem Einsatz beispielsweise die Verzögerungswerte aufzeichnen oder beim Überschreiten von Grenzwerten Alarm auslösen.

Ein besonderer Vorteil des erfindungsgemäßen Verfahrens ist, dass mögliche Störgrößen wie Kraftschwankungen durch ungleichmäßigen Reibungswiderstand in Führungen, temperaturbedingte Viskositätsschwankungen, fertigungsbedingte Bauteiltoleranzen und dergleichen automatisch berücksichtigt und innerhalb der Systemgrenzen durch eine angepasste Kraft des Energieabsorbers ausgeglichen werden. Auch Änderungen der Parameter während des Verzögerungsvorgangs werden, solange nicht das Ende des Verfahrwegs erreicht ist, berücksichtigt.

Um beispielsweise die Kraft, welche ein Energieabsorber auf den zu verzögernden Körper ausübt, auf einem definierten Wert einzustellen, müssen herkömmliche Systeme entweder diese Kraft direkt messen, was sehr aufwändig und nicht immer machbar ist, oder die Systemeigenschaften kennen um über andere Parameter wie z.B. den Spulenstrom auf die Kraft schließen zu können. Dabei sollten auch Störgrößen, welche Einfluss auf die Systemeigenschaften haben, bestimmt und kompensiert werden.

Wichtig ist üblicherweise die Temperatur der magnetorheologischen Flüssigkeit, da diese abhängig vom möglichen Betriebstemperaturbereich sehr großen Einfluss auf die Viskosität und somit auf die Kraft des Energieabsorbers hat. Abhängig von der Anwendung kann auch die Temperaturerhöhung durch die Energieumwandlung während der Verzögerung Einfluss auf den Kraftbereich haben.

Beim erfindungsgemäßen Verfahren wird die Temperatur neben allen andern Störgrößen automatisch kompensiert. Die Temperatur hat lediglich Einfluss auf den Arbeitsbereich (Kraftbereich) des Systems und sollte bei der Systemauslegung berücksichtigt werden, später muss sie nicht mehr berücksichtigt werden. Folglich kann in der Serienanwendung auf den Temperatursensor ganz verzichtet werden.

Statt eines Energieabsorbers mit magnetorheologischer Flüssigkeit kann auch ein Energieabsorber mit elektrorheologischer Flüssigkeit (ERF) beim erfindungsgemäßen Verfahren verwendet werden. Hierbei wird statt dem Magnetfeld (Spulenstrom) das elektrische Feld (Potentialdifferenz bzw. elektrische Spannung zwischen Polen) variiert.

Nachfolgend wird die vorliegende Erfindung anhand der Zeichnungen näher beschrieben. Es zeigen:
- Figur 1:: ein Anwendungsbeispiel in einer Lenksäule;
- Figur 2:: einen Ausschnitt aus einem Energieabsorber entsprechend der Figur 1;
- Figur 3:: den optimalen zeitlichen Verlauf der Relativgeschwindigkeit
- Figur 4:: den zeitlichen Kraftverlauf eines Energieabsorbers am Beispiel eines Unfalls mit Frontalaufprall auf ein Hindernis;
- Figur 5:: ein Blockdiagramm der verwendeten Regelung; sowie
- Figur 6:: ein schematisches Anwendungsbeispiel als Energieabsorber in einem Sitz bei einer Minenexplosion.

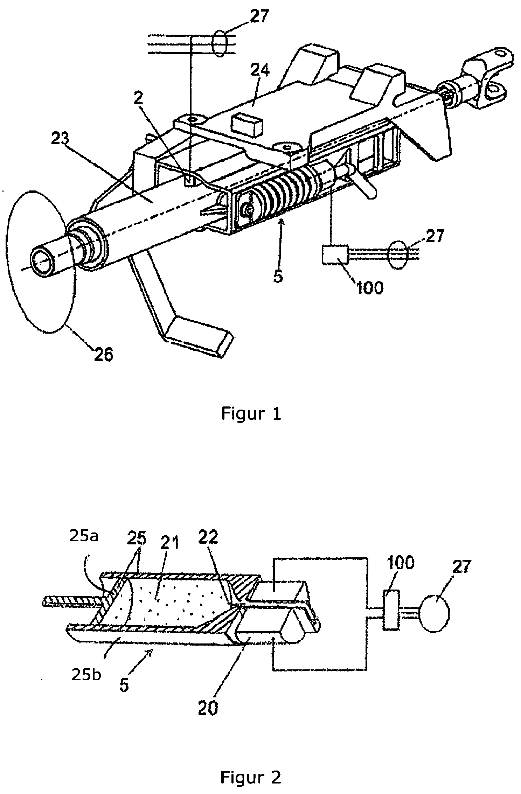

Die Figur 1 zeigt als Anwendungsbeispiel eine Lenksäule mit integriertem Energieabsorber, bei der das verschiebbare Lenksäulenteil 23 mit einem karosseriefesten Lenksäulenteil 24 an der nicht dargestellten Fahrzeugkarosserie gehalten ist. Im Falle eines Aufpralls (Crash) wird durch den Aufprall des Fahrers auf das schematisch dargestellte Lenkrad 26 das verschiebbare Lenksäulenteil 23 gegenüber dem karosseriefesten Lenksäulenteil 24 in seiner Längsrichtung verschoben. Der Energieabsorber 5 ist mit seinem einen Ende am verschiebbaren Lenksäulenteil 23 und mit seinem anderen Ende am karosseriefesten Lenksäulenteil 24 befestigt.

Ein Wegsensor 2 misst den Verfahrweg des verschiebbaren Lenksäulenteils 23 gegenüber dem karosseriefesten Lenksäulenteil 24. Über einen Sicherheits-Bus 27 wird die Weginformation zur Steuerung 100 übermittelt. Die Steuerung 100 bestimmt anhand der Weginformation des Wegsensors 2 den notwendigen Strom der Spule 20 um die gewünschte Verzögerung des Energieabsorbers 5 einzustellen.

Durch zusätzliche Sensoren kann der Regler besser auf die Strecke angepasst werden. Über den Spulenwiderstand kann z.B. die Temperatur der magnetorheologischen Flüssigkeit bestimmt und eine dementsprechende Regelungsanpassung durchgeführt werden.

Ein möglicher Aufbau eines Energieabsorbers 5 wird in Figur 2 dargestellt. Der Energieabsorber 5 weist eine Kolben-Zylindereinheit 25 auf, die mit einer magnetorheologische Flüssigkeit 21 gefüllt ist. Bei einer Relativbewegung der Kolben-Zylindereinheit 25 mit einem bewegbaren Kolbenteil 25a und einem festen Zylinderteil 25b wird der Kolben gegenüber dem Zylinder verschoben, so dass die magnetorheologische Flüssigkeit durch die Engstelle 22 in einen Austrittskanal gedrückt wird. Die Viskosität der magnetorheologischen Flüssigkeit 21 kann durch das Magnetfeld der Spule 20 verändert werden, wodurch sich auch die Kraft auf die Kolben-Zylindereinheit 25 und somit die Verzögerung der bewegten Massen verändern lässt.

Beim Energieabsorber für eine Lenksäule kann der bewegbare Kolben (25a) dem verschiebbaren Lenksäulenteil (23) und der feste Zylinder (25b) dem karroseriefesten Lenksäulenteil (24) zugeordnet sein. Dabei kann eine Übersetzung wie ein Hebel oder ein Seilzug mit Umlenkrolle verwendet werden, wodurch die Relativgeschwindigkeit des bewegbaren Kolbens (25a) zum verschiebbaren Lenksäulenteil (23) nicht der Relativgeschwindigkeit des festen Zylinders (25b) zum karroseriefesten Lenksäulenteil (24) entsprechen muss.

Eine mögliche Anwendung des erfindungsgemäßen Verfahrens, bei dem eine Übersetzung zum Einsatz kommen kann, ist der Sicherheitsgurt in Fahrzeugen. Beim rotativen Aufbau als Energieabsorber im Gurtaufroller ist das Verhältnis der Gurtauszugsgeschwindigkeit nicht fest an die Drehzahl des Aufrollers gekoppelt, sondern abhängig vom Rollendurchmesser (und somit abhängig vom zurückgelegten Weg bzw. der Position des Insassen). Beim Einbau in die Gurtpeitsche als linearer Energieabsorber kann die freigegebene Gurtlänge ungefähr verdoppelt und die Kraft halbiert werden.

Der Spulenstrom wird von einer Steuerung 100 bestimmt, wobei die Steuerung über den Sicherheits-Bus 27 mit anderen Systemen kommunizieren kann. Die Energie- und/oder Signalübertragung kann auch kabellos erfolgen, beispielsweise über Funk zu bestimmten Sensoren oder anderen Insassenschutzsystemen.

Eine bevorzugte Ausführung kommt ohne Batterie aus und erhält die für die Funktion notwendige Energie mittels induktiver Kopplung (drahtloser Energieversorgung). Besonders bevorzugt sind auch Ausführungen, die die zum Betrieb nötige Energie direkt aus der Umwelt beziehen und lokal zwischenspeichern (Energy Harvesting). Dabei sind zur Energiewandlung thermoelektrische Generatoren, Solarzellen, Elemente die Vibrationsenergie in elektrische Energie wandeln und andere sowie entsprechende lokale Energiespeicher möglich. Denkbar ist auch, die Bewegung des Sensors selbst zur Energieerzeugung zu verwenden.

Nicht dargestellt wurde die Energieversorgung des Systems, da vorzugsweise ein Energiespeicher wie beispielsweise eine Batterie, ein Akkumulator oder ein Kondensator in die Steuerung 100 oder den Energieabsorber 5 integriert ist. Somit kann eine völlig autonome Funktion des Systems gewährleistet werden, was zum Beispiel den Austausch oder Umbau erleichtert, bei Retrofit-Systemen keiner nachträgliche Verkabelung bedarf oder zumindest den kurzzeitigen Betrieb ermöglicht, wenn bei einem Unfall die Bordspannung eines Fahrzeuges ausfällt.

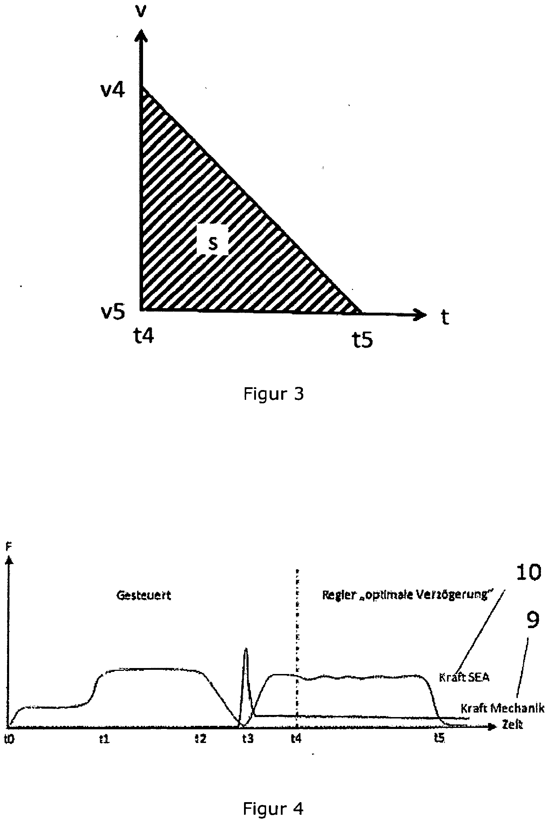

In der Figur 3 ist als Diagramm auf der Abszisse (x-Achse) die Zeit t aufgetragen, die bei gleichmäßiger Verzögerung für den Verfahrweg benötigt wird. Auf der Ordinate (y-Achse) ist die Geschwindigkeit v aufgetragen. Ziel der Regelung ist es, die Ausgangsgeschwindigkeit v4 beim Zeitpunkt t4 entlang einer möglichst geraden Linie bis zum Stillstand (v5 = 0) beim Zeitpunkt t5 zu reduzieren, der am Ende des verfügbaren Verfahrweges s erreicht sein muss. Der verfügbare Verfahrweg s entspricht dabei der im Diagramm eingeschlossenen Fläche. Die Steigung der Linie zeigt die dafür erforderliche Beschleunigung bzw. Verzögerung an. Eine gerade Linie bedeutet eine über den Verfahrweg konstante Verzögerung, die direkte Verbindung zwischen der Ausgangsgeschwindigkeit v4 und dem Punkt v5 = 0 definiert die kleinstmögliche Verzögerung, bei der die Geschwindigkeit v4 über die Strecke s auf 0 verzögert werden kann. Die Verzögerung a ist folglich nur von der Ausgangsgeschwindigkeit und dem Bremsweg s abhängig.

Die für eine bestimmte Verzögerung a notwendige Kraft F ist jedoch von der bewegten Masse abhängig (F = m * a). Kennt der Regler die bewegte Masse, kann die Regelung stark vereinfacht und der Verzögerungsverlauf optimiert werden. Der Regler kann aber auch völlig autonom aufgebaut werden, das heißt ihm ist zu Crashbeginn nur der Weg bekannt. Für die Berechnung fehlende Parameter muss sich der Regler aus dem Wegsignal und der prozessorintern vorhandenen Zeit erarbeiten. Dabei gilt: je kleiner der Dynamikbereich (Bereich möglicher Geschwindigkeiten und Massen) des Reglers sein muss, desto besser kann der Regler dem optimalen Kurvenverlauf folgen.

Es ist ersichtlich, dass bei hohen Aufprallgeschwindigkeiten wie etwa der Ausgangsgeschwindigkeit V-max über den gesamten Weg eine gleich hohe Verzögerung erforderlich ist, um das Ziel zu erreichen. Wird, wie im Stand der Technik vorgeschlagen, die Verzögerung begrenzt, so verläuft die Weg-/Geschwindigkeitskurve flacher und es entsteht am Ende des verfügbaren Crashweges eine Restgeschwindigkeit, die zu einem harten Aufprall führt. Je nach Anwendung kann aber auch beim erfindungsgemäßen Verfahren eine bestimmte Restgeschwindigkeit zulässig sein, beispielsweise wenn diese schädliche oder gefährliche Werte nicht überschreitet.

Die Figur 4 zeigt in einem Beispiel den zeitlichen Verlauf der auf den Energieabsorber 5 in einer Lenksäule wirkenden Kräfte vom Beginn eines Unfallgeschehens an. In diesem Beispiel ist dem Regler eine Steuerkurve überlagert, was die Kommunikation der Regelung mit anderen Steuergeräten und Sensoren voraussetzt.

Auf der Abszisse ist die Zeit t aufgetragen, die Ordinate stellt die Kraft F dar. Der mechanische Kraftverlauf 9 veranschaulicht die durch die Lenksäule aufgebrachten Gegenkräfte gegen die durch den Aufprall des Fahrers verursachte Verschiebung des verschiebbaren Teils der Lenksäule. Der Energieabsorber-Kraftverlauf 10 veranschaulicht die durch die Bestromung der Spule des Energieabsorbers bereitgestellte Gegenkraft gegen eine Verschiebung des verschiebbaren Teils der Lenksäule.

Zum Zeitpunkt t0, der möglicherweise vor dem tatsächlichen Aufprall liegt, stellen die fahrzeuginternen Sicherheitssysteme fest, dass es einen Unfall gibt. Die ersten Sicherheitsaktoren werden betätigt, beispielsweise die Gurtstraffer, die Sitzverstellung und dergleichen. Der Energieabsorber 5 baut bereits eine höhere Dämpfungskraft auf, um ein Verfahren der Lenksäule 23 durch Trägheit zu verhindern.

Bei der Zeit t1 wird der Airbag gezündet. Die Gegenkraft des Energieabsorbers 5 wird zuvor nochmals erhöht, um das Verfahren der Lenksäule durch den entstehenden Impuls der Auslösung des Airbags zu verhindern.

Bei der Zeit t2 errechnet die Steuerung 100 den bevorstehenden Aufprall des Fahrers auf das Lenkrad 26, der möglicherweise durch Informationen aus dem Sicherheitsgutsystem angekündigt wird. Das Lenkrad 26 und die Lenksäule 23 selbst setzen durch ihre Massenträgheit und Reibungskräfte dem Aufprall des Fahrers bereits eine Kraft 9 entgegen, zu der sich die Kraft des Energieabsorbers 10 addiert. Um die Gesamtkraft zu begrenzen, die auf den Fahrer wirkt, wird in diesem Moment die Dämpfungskraft des Energieabsorbers 10 reduziert. Gegenüber dem Stand der Technik kann die Belastung des Fahrers deutlich gesenkt werden, da auf ein Losbrechelement verzichtet werden kann.
Die Steuerung 100 erhöht gleich nach dem Aufprall die Dämpfungskraft des Energieabsorbers 5 auf einen aus den vorliegenden Unfallparametern berechneten Startwert.

Bei der Zeit t4 ist der Bereich der gleichförmigen Verzögerung des Fahrers erreicht, der Regler übernimmt die Berechnung der optimalen Verzögerung auf Basis der Daten des Wegsensors 2 bis zum Stillstand. Die Gegenkraft des Energieabsorbers 5 wird permanent kontrolliert und angepasst. Der Übergang von der Steuerung zur Regelung kann fließend sein oder auch abrupt in Abhängigkeit von der Zeit, dem Weg, der Signalqualität und dem Ergebnis der internen Regelalgorithmen erfolgen.

Bei der Zeit t5 ist der Stillstand des verfahrbaren Teils der Lenksäule 23 gegenüber dem karosseriefesten Teil 24 erreicht, ohne dass es zu einem Anschlag aufgrund einer verbleibenden Restgeschwindigkeit kommt. Im optimalen Fall wird genau beim Erreichen des Endes der verfügbaren Wegstrecke die Relativgeschwindigkeit zu 0.

In Figur 4 wird jedoch ausdrücklich nur ein mögliches Beispiel für das Überlagern des erfindungsgemäßen Regelungsverfahrens durch eine Steuerung oder andere Regelung dargestellt. Abhängig von der Anwendung können verschiedenste andere Verfahren das eigentliche Regelungsverfahren beeinflussen und dabei zeitgleich ablaufen oder diesem vor- oder nachgelagert sein.

Die dargestellte Steuerung kann vorzugsweise derart modifiziert werden, dass der Aufprall / der Verzögerungsbeginn auf elastische und federnde Körper angepasst wird. Durch eine Modulation der Kraft des Energieabsorbers können die im zu verzögernden Körper wirkenden Kräfte besser kontrolliert werden und beispielsweise ein zu starkes Überschwingen verhindert werden.

Eine vorteilhafte Ausführung sieht zusätzliche Sensoren vor, um die Regelung zu optimieren wenn beispielsweise die durch den Energieabsorber erzeugte Kraft von der für den zu verzögernden Körper relevanten Kraft abweichen kann. Beispielsweise kann bei einem Energieabsorber für Helikopter- oder Minenschutz-Sitze ein zusätzlicher Beschleunigungsaufnehmer am Passagier bzw. einer vom Passagier getragenen (Kleidung, Ausrüstung, Geräte,...) oder am Passagier befestigten Komponente (Gurt, Ausrüstung,...) angebracht sein.

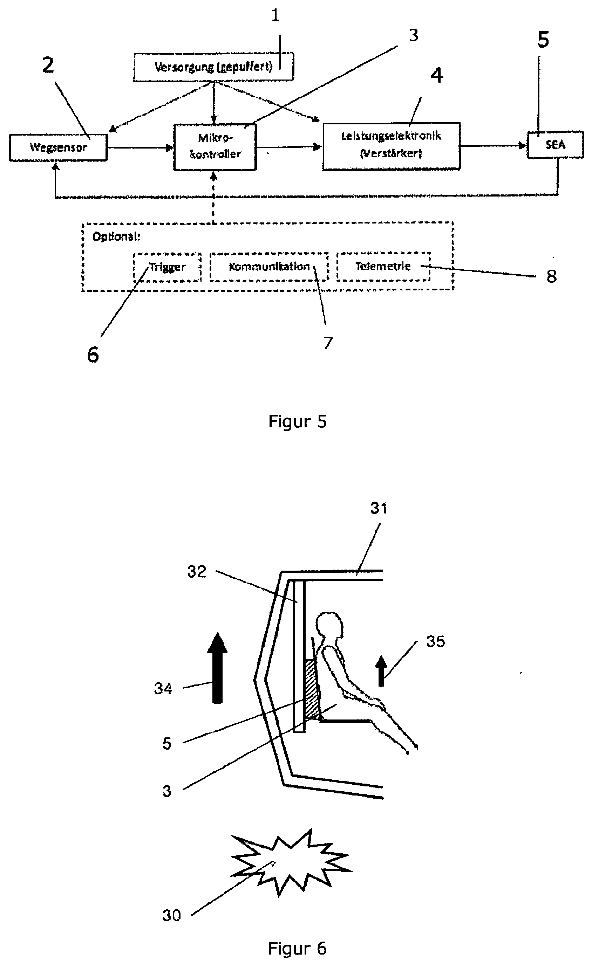

Die Figur 5 zeigt ein mögliches Regelungssystem der vorliegenden Erfindung als Blockschaltbild. Es ist zunächst eine Spannungsversorgung 1 vorgesehen, die einen Wegsensor 2, einen Mikrocontroller 3 und eine Leistungselektronik 4 mit elektrischem Strom versorgt. Die Leistungselektronik 4 und der Mikrokontroller 3 bilden die Steuerung 100, die in den Figuren 1 und 2 dargestellt sind. Die Leistungselektronik 4 wiederum steuert einen steuerbaren Energieabsorber 5 an, welcher im Wesentlichen als hydrodynamischer Dämpfer mit einer magnetorheologischen Flüssigkeit ausgebildet, so dass die Dämpfungskraft über ein externes Magnetfeld steuerbar ist, wobei das Magnetfeld über den Strom durch eine Spule variierbar ist.

Möglich zusätzliche Komponenten können unter Anderem eine Triggervorrichtung 6, eine Kommunikationseinheit 7 oder eine Telemetrieeinheit 8 umfassen.

Abhängig von der Art der Versorgung 1 kann zusätzlich ein lokaler Energiespeicher wie ein Kondensator oder ein Akku vorgesehen sein, der mögliche kurzzeitige Lastspitzen abdecken oder auch beispielsweise im Falle einer Unterbrechung der Energieversorgung die Energie für einen Verzögerungsvorgang bereitstellen kann. Dabei ermöglicht eine höhere Versorgungsspannung mehr Energie zu speichern und die induktive Trägheit der Spule schneller zu überwinden. Das Laden und die Zustandsüberwachung der Versorgung 1 des Energiespeichers kann durch den Mikrocontroller 3 vorgenommen werden.

Der Wegsensor 2 muss der Anwendung entsprechend eine große Dynamik aufweisen. Bei langsamer Verfahrgeschwindigkeit am Ende des Verfahrwegs soll noch genügend Information generiert werden um den Weg bei der entsprechenden Abtastfrequenz mit ausreichender Genauigkeit auflösen zu können. Bei hohen Verfahrgeschwindigkeiten am Anfang des Verfahrweges muss die Verarbeitung der Weginformation noch möglich sein. Es ist möglich die Bewegungsform umzuwandeln, beispielsweise die lineare Bewegung in eine Rotation, wobei die Umwandlung auch eine Übersetzung umfassen kann.

Je nach Anwendung können sich digitale oder analoge Sensoren besser eignen. Beispielsweise kann durch einen digitalen Sensor eine Analog/Digital-Wandlung eingespart werden, was Rechenzeit und Kosten sparen kann. Eingesetzt werden können zum Beispiel Magnetbandsensoren oder sonstige induktive, resistive oder kapazitive Sensoren, besonders vorteilhaft sind jedoch optische Encoder oder magnetische Drehgeber.

Unter Wegsensor 2 wird ein Sensor verstanden, der mindestens eine physikalische Größe misst, aus der sich Weg, Geschwindigkeit und / oder Beschleunigung ableiten lassen. Es können ausdrücklich auch mehrere Sensoren verwendet werden.

Das Verfahren stellt üblicherweise keine besonderen Anforderungen an die Hardware, im einfachsten Falle reicht ein Mikrocontroller 3 mit digitalen Ein- und Ausgängen und einem internen Timer aus. Es können auch weitere Encoder-Eingänge, zusätzlicher Speicher und Kommunikationsschnittstellen oder Funktionseinheiten wie ein PWM-Block vorgesehen sein. Je nach Anwendung kann die Umsetzung des Reglers in einer speziellen Hardware wie DSP, FPGA, ASIC und anderen vorteilhaft sein.

Anstelle einen Regler als Code in einem Mikrocontroller zu programmieren ist es vorstellbar, den Regler aus diskreten Bauteilen aufzubauen. Durch geeignete Beschaltung von Verstärkern, Widerständen, Kondensatoren und dergleichen lässt sich das erfindungsgemäße Verfahren ebenso umsetzen.

Die Leistungselektronik 4 setzt die Stromvorgabe der Steuerung 100 um und kontrolliert den Strom in der Spule des steuerbaren Energieabsorbers 5. Bevorzugt wird ein einfacher Aufbau der Leistungselektronik 4 mit einem über PWM angesteuerten Schalter wie beispielsweise Transistor, MOSFET oder IGBT und einer Freilaufdiode. Weitere Ausbaustufen können als Halb- oder Vollbrücke erfolgen. Es ist auch möglich, in die Leistungselektronik weitere Komponenten zu integrieren, die der Zustandsüberwachung der Vorrichtung, einer weiteren Messwerterfassung für Strom, Spannung oder Temperatur, oder beispielsweise auch der Heizung des Energieabsorbers 5 dienen können.

Der steuerbare Energieabsorber 5 kann eine Bewegung mit veränderbarer Kraft dämpfen. Er soll möglichst starr mit der Wegmessung gekoppelt sein. Vorzugsweise kann der Wegsensor 2 in den Energieabsorber 5 integriert sein.

Es kann auch ein Trigger 6 vorgesehen sein, der beispielsweise einen bevorstehenden Aufprall ankündigt und den Mikrocontroller 3 darauf vorbereitet. Dieser kann sonst andere Tätigkeiten wie Selbstüberwachung, Laden eines Energiepuffers und Ähnliches übernehmen oder in einem energiesparenden Ruhezustand verbleiben.

Mit einem Kommunikationsmodul 7 kann der Mikrocontroller 3 mit anderen Systemen kommunizieren, an die er beispielsweise über den Sicherheits-Bus 27 angebunden ist. Auch die Kommunikation mit dem Wegsensor 2 kann über diese Schnittstelle erfolgen, wie in Figur 1 schematisch dargestellt ist. Das bietet Vorteile wenn mehrere Systeme an der Verzögerung beteiligt sind bzw. über Daten verfügen, mit denen der Regler besser auf die jeweilige Situation angepasst werden kann. Zudem werden Fehlerdiagnose und Zustandsüberwachung erleichtert.

Über ein Telemetriemodul 8 können Daten anderer Systeme oder Sensoren ausgewertet werden. Auf diese Weise können zum Beispiel in einem Kraftfahrzeug wichtige Parameter wie zum Beispiel Unfallart, Unfallschwere, Fahrergewicht und Fahrerposition, wie auch von anderen in den Unfall involvierten Fahrzeugen via WLAN, Mobilfunk oder Long Term Evolution (LTE) übermittelte Daten, noch vor dem Aufprall auf das Lenkrad mitgeteilt werden, worauf die Regelparameter angepasst werden können.

Figur 6 zeigt die Anwendung des Verfahrens am Beispiel eines Mannschaftssitzes in einem minensicheren Fahrzeug (MRAP). Schematisch dargestellt ist wie eine Minenexplosion 30 die Karosserie 31 des Fahrzeugs stark beschleunigt. Der Sitz mit dem Passagier 33 ist über den Energieabsorber 5 beweglich mit dem Sitzträger 32 verbunden, welcher wiederum fest mit der Karosserie 31 verbunden ist.

Da die Beschleunigung am Fahrzeugboden am stärksten ist und der Karosserie 31 entlang nach oben abnimmt, wurde in diesem Beispiel der Sitzträger 32 am Fahrzeugdach angebracht. Es ist natürlich auch möglich, den Sitzträger 32 oder den Energieabsorber 5 direkt an anderen Karosserieteilen zu befestigen.

Der Energieabsorber 5 gibt nur einen Teil der Karosseriebeschleunigung 34 an den Passagier weiter, weshalb dessen Beschleunigung 35 deutlich kleiner ausfällt. Dabei fährt der Sitz in Richtung Fahrzeugboden.

Das erfindungsgemäße Verfahren hat auch hier den Vorteil, dass obwohl weder die von Art und Ort der Explosion 30 abhängige Karosseriebeschleunigung 34 noch das Gewicht des Passagiers 33 bekannt sind, der Energieabsorber 5 so angesteuert wird, dass die Belastung des Passagiers 33 möglichst gering ist. Das wird erreicht, indem die Beschleunigung 35 möglichst konstant und mit möglichst kleiner Kraft so erfolgt, dass die Relativgeschwindigkeit zwischen Karosserie 31 und Passagier 33 am Ende des Verfahrweges annähernd 0 ist bzw. auf ein tolerables Maß gesenkt wird.

Gegenüber herkömmlichen Verfahren nach dem Stand der Technik wird situationsabhängig also weder eine unnötig hohe Beschleunigung ausgeübt und der Verfahrweg nicht voll ausgenützt noch zu schwach beschleunigt, wodurch am Ende des Verfahrwegs ein gefährlicher Kraftimpuls entstehen kann.

Nachdem der Sitz mit dem Passagier 33 zum Ausgleich der Relativgeschwindigkeit ganz nach unten zum Fahrzeugboden gefahren ist, kann der Energieabsorber 5 oder ein parallel zu ihm angebrachtes System wie beispielsweise eine Feder den Sitz zurück in seine Ausgangsposition bringen oder zumindest etwas zurück bewegen. Dabei kann der Energieabsorber 5 wieder als Kraftbegrenzer eingesetzt werden, der die dabei auftretenden Kräfte begrenzt.

Der durch diese Rückstellung gewonnene Verfahrweg kann erneut benutzt werden um die auftretenden Kräfte mittels Energieabsorber 5 und dem erfindungsgemäßen Verfahren zu minimieren, wenn das Fahrzeug, dass durch die Explosion 30 nach oben geschleudert wurde, auf den Boden aufschlägt.

Sollte es zu einer der ersten Explosion nachfolgenden zweiten oder sogar mehreren Explosion kommen, kann dieser Energieabsorber ebenfalls wieder eingesetzt werden und minimiert die auftretenden Kräfte abermals.

Weiter Anwendungsgebiete für den Energieabsorbers mit Regelung nach den Merkmalen des Anspruchs 1 oder der weiteren Ansprüche können sein, ohne darauf beschränkt zu sein:
- Dämpfer in einer Sicherheitsgurtvorrichtung von (Kraft)fahrzeugen (variierende Parameter wie beim Energieabsorber in der zuvor beschriebenen Lenkung, z.B. verschiedene Fahrzeuggeschwindigkeit, Masse des Insassen, Kleidung des Insassen, Rückwirkung/Anpassung an andere Sicherheitssysteme...).

- Dämpfer in den Stoßstangen, Sitzen oder der Crashstruktur von (Kraft-)fahrzeugen (variierende Parameter wie beim Energieabsorber in der zuvor beschriebenen Lenkung, z.B. verschiedene Fahrzeuggeschwindigkeit, Überdeckungsgrad...).
- Bei Werkzeugmaschinen oder Industrievorrichtungen als End- oder Notanschlag, damit sich bewegende Werkzeuge, Krane, Schlitten usw. vorteilhaft (ohne bzw. mit geringstmöglicher Beschädigung) zum Stillstand gebracht werden.
- Fangvorrichtung für landende Flugzeuge auf Flugzeugträgern. Anpassung der Fangseilkraft aufgrund von variierender Landegeschwindigkeit und Anflugwinkel sowie vom Flugzeuggewicht (je nach Flugzeugtyp, Beladung und Tankinhalt)
- Dämpfungssysteme in Hubschraubern, vorzugsweise in den Sitzen, welche beim Aufprall auf den Boden aufgrund von z.B. Triebwerksschaden (Autorotation) die freiwerdende Energie absorbieren, sodass die Passagiere geschützt werden.
- Den Rückschlag bei Kanonen / Gewehren dämpfen (rückstoßfrei), abhängig von der Munition.
- Dämpfungssystem in Schuhen, vorzugsweise in Laufschuhen, damit beim Auftreten auf dem Untergrund (Laufen mit verschiedenere Geschwindigkeit, unterschiedlicher Schrittlänge, Sprünge über Hindernisse, Muskelermüdung, Pronationsfehler...) die Energie gelenkschonend absorbiert wird.

### Bezugszeichenliste

- 1: Spannungsversorgung
- 2: Wegsensor
- 3: Mikrocontroller
- 4: Leistungselektronik
- 5: Energieabsorber
- 6: Triggervorrichtung
- 7: Kommunikationseinheit
- 8: Telemetrieeinheit
- 9: Kraft Mechanik
- 10: Kraft Energieabsorber

- 20: Spule
- 21: Magnetorheologische Flüssigkeit
- 22: Engstelle
- 23: verschiebbares Lenksäulenteil
- 24: karosseriefestes Lenksäulenteil
- 25a: Kolben
- 25: bZylinder
- 26: Lenkrad
- 27: Sicherheits-Bus

- 30: Explosion
- 31: Karosserie
- 32: Sitzträger
- 33: Passagier
- 34: Beschleunigung Karosserie
- 35: Beschleunigung Passagier

- 100: Steuerung

## Patentansprüche

1. Verfahren zur Regelung des Stromflusses einer elektromagnetischen Spule (20), die die Viskosität einer magnetorheologischen Flüssigkeit (21) eines steuerbaren Energieabsorbers (5) ansteuert, wobei der Energieabsorber (5) als Dämpfer zwischen zwei zueinander entlang eines begrenzten Verfahrwegs bewegbaren Teilen (23, 24) wirkt, dessen Dämpfungskraft durch den Stromfluss durch die elektromagnetische Spule (20) bestimmt ist, **dadurch gekennzeichnet, dass** folgende Schritte vorgesehen sind:
- die Relativgeschwindigkeit zwischen einem ersten beweglichen Teil (25a) des Energieabsorbers (5) und einem zweiten festen Teil (25b) wird kontinuierlich oder in Intervallen aus den Signalen von zumindest zwei Beschleunigungssensoren ermittelt, wobei zumindest ein Beschleunigungssensor auf dem verschiebbaren Teil (25a) und zumindest ein weiterer Beschleunigungssensor auf dem relativ dazu ruhenden Teil (25b) des Energieabsorbers (5) oder an mit diesen Teilen entsprechend verbundenen Elementen angebracht sind,
- die für die Abbremsung aus der gemessenen Relativgeschwindigkeit zum Stillstand bis zum Ende des Verfahrweges erforderliche Beschleunigung wird berechnet,
- aus der berechneten Beschleunigung wird der Stromfluss derart berechnet, dass beim weiteren Verfahren der zueinander bewegbaren Teile (23, 24) der Wert der Beschleunigung angenähert erreicht wird.

2. Verfahren zur Regelung des Stromflusses einer Spule (20), die die Viskosität einer magnetorheologischen Flüssigkeit (21) eines steuerbaren Energieabsorbers (5) ansteuert, wobei der Energieabsorber (5) als Dämpfer zwischen zwei entlang eines begrenzten Verfahrwegs zueinander bewegbaren Teilen (23, 24) wirkt, dessen Dämpfungskraft durch den Stromfluss durch die Magnetspule (20) bestimmt ist, **dadurch gekennzeichnet, dass** folgende Schritte vorgesehen sind:
- die Relativgeschwindigkeit zwischen einem ersten beweglichen Teil (23) und einem zweiten festen Teil (24) wird kontinuierlich oder in Intervallen aus den Signalen von zumindest zwei Beschleunigungssensoren ermittelt, wobei zumindest ein Beschleunigungssensor auf dem verschiebbaren Teil (25a) und zumindest ein weiterer Beschleunigungssensor auf dem relativ dazu ruhenden Teil (25b) des Energieabsorbers (5) oder an mit diesen Teilen entsprechend verbundenen Elementen angebracht sind,
- der für die Abbremsung aus der gemessenen Relativgeschwindigkeit zum Stillstand bis zum Ende des Verfahrweges erforderliche Verlauf der Geschwindigkeit wird zumindest einmal berechnet,
- aus der ermittelten Relativgeschwindigkeit und dem berechneten Geschwindigkeitsverlauf wird der Stromfluss derart berechnet, dass beim weiteren Verfahren der zueinander bewegbaren Teile (23, 24) der Wert der Geschwindigkeit angenähert erreicht wird.

3. Verfahren nach Anspruch 2, **dadurch gekennzeichnet, dass** der zum Stillstand am Ende des Verfahrweges erforderliche Geschwindigkeitsverlauf abhängig von dem Verfahrweg oder abhängig von der Verfahrzeit berechnet wird.

4. Verfahren nach einem der vorhergehenden Ansprüche, **dadurch gekennzeichnet, dass** die Ermittlung der Relativgeschwindigkeit wiederholt durchgeführt wird und bei jeder Messung der noch verfügbare Verfahrweg ermittelt wird.

5. Verfahren nach einem der vorhergehenden Ansprüche, **dadurch gekennzeichnet, dass** die Relativgeschwindigkeit und/oder der noch verfügbare Verfahrweg aus den Signalen eines Wegsensors (2) berechnet werden, der die relative Position der zueinander bewegbaren Teile (25 a, 25b) des Energieabsorbers (5) erfasst.

6. Verfahren nach einem der vorhergehenden Ansprüche, **dadurch gekennzeichnet, dass** die für die Regelung benötigten Positions-, Weg-, Geschwindigkeits- und / oder Beschleunigungswerte direkt oder indirekt über andere physikalische Größen von zumindest einem Sensor ermittelt werden.

7. Verfahren nach einem der vorhergehenden Ansprüche, **dadurch gekennzeichnet, dass** die Regelung der Verzögerung autonom, also ohne Verbindung zu sonstigen Verzögerungssystemen, Steuergeräten oder Sensoren, erfolgt.

8. Verfahren nach einem der vorhergehenden Ansprüche, **dadurch gekennzeichnet, dass** vor und / oder während der Verzögerung bekannte Parameter bekannt sind um die Reglerparameter zu optimieren.

9. Verfahren nach einem der vorhergehenden Ansprüche, **dadurch gekennzeichnet, dass** der Regler mit anderen Verzögerungssystemen, Steuergeräten und / oder Sensoren kommuniziert.

10. Verfahren nach einem der vorhergehenden Ansprüche, **dadurch gekennzeichnet, dass** die Regelung des Energieabsorbers (5) gemeinsam mit anderen Verzögerungssystemen die Verzögerung so regelt, dass die Belastung der zu verzögernden Einheit minimiert wird.

11. Verfahren nach einem der vorhergehenden Ansprüche, **dadurch gekennzeichnet, dass** zwischen der Regelabweichungserkennung, der nachfolgenden Berechnung und der angenäherten Anpassung durch den Energieabsorber (5) weniger als 1s und weniger als 100ms vergeht.

12. Verfahren nach einem der vorhergehenden Ansprüche, **dadurch gekennzeichnet, dass** dem Regler eine Steuerung (100) übergeordnet ist, welche die Kraft des Energieabsorbers (5) vor, während und / oder nach dem Verzögerungsvorgang zumindest teilweise steuern kann.

13. Verfahren nach einem der vorhergehenden Ansprüche, **dadurch gekennzeichnet, dass** verschiedene Parameter wie Messergebnisse oder Berechnungsresultate intern oder extern gespeichert und später abgerufen werden können.

14. Verfahren nach einem der vorhergehenden Ansprüche, **dadurch gekennzeichnet, dass** es zur Regelung eines steuerbaren Energieabsorbers (5) in einem Kraftfahrzeug eingesetzt wird.

15. Verfahren nach einem der vorhergehenden Ansprüche, **dadurch gekennzeichnet, dass** es in einem Sicherheits-, Schutz- und / oder Rückhaltesystem eines Kraftfahrzeugs angewendet wird.

16. Verfahren nach einem der vorhergehenden Ansprüche, **dadurch gekennzeichnet, dass** es zur Regelung eines steuerbaren Energieabsorbers (5) in einer Sitzaufhängung verwendet wird.

17. Vorrichtung zur Regelung eines steuerbaren Energieabsorbers (5), umfassend eine Kolben-Zylindereinheit, durch die eine magnetorheologischen Flüssigkeit (21) durch eine Kolben-Zylindereinheit (25) durch eine Engstelle (22) gedrückt wird, wobei die Viskosität der magnetorheologischen Flüssigkeit an der Engstelle durch den Stromfluss durch eine Spule (20) veränderbar ist, wodurch die Dämpfungskraft einstellbar ist, **dadurch gekennzeichnet, dass** eine Sensoreinheit zur Ermittlung der Relativposition , -geschwindigkeit oder -beschleunigung des bewegbaren Teils (25a) zum feststehenden Teil (25b) des Energieabsorbers (5) vorgesehen ist, wobei zumindest ein Beschleunigungssensor auf dem bewegbaren Teil (25a) und zumindest ein weiterer Beschleunigungssensor auf dem relativ dazu ruhenden Teil (25b) des Energieabsorbers (5) oder an mit diesen Teilen entsprechend verbundenen Elementen angebracht sind.

18. Vorrichtung nach Anspruch 17, **dadurch gekennzeichnet, dass** die Sensoreinheit zur Ermittlung der Relativposition , -geschwindigkeit oder -beschleunigung des bewegbaren Teils (25a) zum feststehenden Teil (25b) des Energieabsorbers (5) in den Energieabsorber (5) integriert ist.

19. Verfahren nach einem der vorhergehenden Ansprüche 1 bis 16, **dadurch gekennzeichnet, dass** der Einfluss von Störgrößen wie beispielsweise Temperatur, Reibung oder Zusammensetzung der Flüssigkeit (21) auf die von dem Energieabsorber (5) erzeugte Gegenkraft automatisch durch das Verfahren selbst kompensiert wird.

20. Verfahren nach einem der vorhergehenden Ansprüche 1 bis 16 oder 19, **dadurch gekennzeichnet, dass** die Geschwindigkeit am Ende des Verfahrwegs annähernd Null ist oder einen bestimmten Wert nicht überschreitet.

## Claims

1. Method for regulating the current flow of an electromagnetic coil (20) which controls the viscosity of a magnetorheological fluid (21) of a controllable energy absorber (5), said energy absorber (5) acting as a damper between two parts (23, 24) which are moveable relative to one another along a limited travel path, the damping force of which is determined by the flow of current through the electromagnetic coil (20), **characterised in that** the method comprises the following steps:
- the relative velocity between a first moveable part (25a) of the energy absorber (5) and a second fixed part (25b) is determined, continuously or at intervals, from the signals from at least two acceleration sensors, wherein at least one acceleration sensor is mounted on the moveable part (25a) and at least one further acceleration sensor on the part (25b) of the energy absorber (5) which is immobile in relation thereto, or on elements correspondingly connected with these parts,
- the acceleration necessary for deceleration from the measured relative velocity to standstill by the end of the travel path is calculated,
- the current flow is calculated from the calculated acceleration such that the value for the acceleration is approximately achieved during further travel of the parts (23, 24) which are moveable relative to one another.

2. Method for regulating the current flow of a coil (20) which controls the viscosity of a magnetorheological fluid (21) of a controllable energy absorber (5), said energy absorber (5) acting as a damper between two parts (23, 24) which are moveable relative to one another along a limited travel path, the damping force of which is determined by the flow of current through the magnetic coil (20), **characterised in that** the method comprises the following steps:
- the relative velocity between a first moveable part (23) and a second fixed part (24) is determined, continuously or at intervals, from the signals from at least two acceleration sensors, wherein at least one acceleration sensor is mounted on the moveable part (25a) and at least one further acceleration sensor on the part (25b) of the energy absorber (5) which is immobile in relation thereto, or on elements correspondingly connected thereto,
- the velocity curve which is necessary for deceleration from the measured relative velocity to standstill by the end of the travel path is calculated at least once,
- the current flow is calculated from the determined relative velocity and the calculated velocity curve such that the value for the velocity is approximately achieved during further travel of the parts (23, 24) which are moveable relative to one another.

3. Method according to Claim 2, **characterised in that** the velocity curve necessary in order to arrive at a standstill at the end of the travel path is calculated depending on the travel path or depending on the travel time.

4. Method according to any one of the preceding claims, **characterised in that** the determination of the relative velocity is carried out repeatedly and the travel path still available is determined with each measurement.

5. Method according to any one of the preceding claims, **characterised in that** the relative velocity and/or the travel path still available are calculated from the signals from a travel sensor (2) which registers the relative position of the parts (25a, 25b) of the energy absorber (5) which are moveable relative to one another.

6. Method according to any one of the preceding claims, **characterised in that** the position, travel, velocity and/or acceleration values required for the regulation are determined directly or indirectly via other physical variables from at least one sensor.

7. Method according to any one of the preceding claims, **characterised in that** the regulation of the deceleration takes places autonomously, that is to say without connection to other deceleration systems, control devices or sensors.

8. Method according to any one of the preceding claims, **characterised in that** known parameters are known before and/or during the deceleration in order to optimise the regulator parameters.

9. Method according to any one of the preceding claims, **characterised in that** the regulator communicates with other deceleration systems, control devices and/or sensors.

10. Method according to any one of the preceding claims, **characterised in that** the regulation of the energy absorber (5) regulates the deceleration jointly with other deceleration systems such that the loading on the unit which is to be decelerated is minimised.

11. Method according to any one of the preceding claims, **characterised in that** less than 1 s and less than 100ms elapses between the detection of the control deviation, the subsequent calculation and the approximated adjustment by the energy absorber (5).

12. Method according to any one of the preceding claims, **characterised in that** the regulator is subordinate to a control system (100) which can at least partially control the force of the energy absorber (5) before, during and/or after the deceleration process.

13. Method according to any one of the preceding claims, **characterised in that** various parameters such as measurement results or calculation results can be stored internally or externally and accessed later.

14. Method according to any one of the preceding claims, **characterised in that** it is used to regulate a controllable energy absorber (5) in a motor vehicle.

15. Method according to any one of the preceding claims, **characterised in that** it is used in a safety, protective and/or restraint system of a motor vehicle.

16. Method according to any one of the preceding claims, **characterised in that** it is used to regulate a controllable energy absorber (5) in a seat suspension.

17. Device for regulating a controllable energy absorber (5) comprising a piston-cylinder unit by means of which a magnetorheological fluid (21) is forced through a constriction (22) by a piston-cylinder unit (25), wherein the viscosity of the magnetorheological fluid at the constriction can be altered by the flow of current through a coil (20), as a result of which the damping force can be adjusted, **characterised in that** a sensor unit is provided to determine the relative position, velocity or acceleration of the moveable part (25a) in relation to the fixed part (25b) of the energy absorber (5), wherein at least one acceleration sensor is mounted on the moveable part (25a) and at least one further acceleration sensor on the part (25b) of the energy absorber (5) which is immobile in relation thereto, or on elements correspondingly connected thereto.

18. Device according to Claim 17, **characterised in that** the sensor unit for determining the relative position, velocity or acceleration of the moveable part (25a) in relation to the fixed part (25b) of the energy absorber (5) is integrated in the energy absorber (5).

19. Method according to any one of the preceding Claims 1 to 16, **characterised in that** the influence of disturbance variables such as, for example, temperature, friction or the composition of the fluid (21) on the counterforce generated by the energy absorber (5) is automatically compensated by the method itself.

20. Method according to any one of the preceding Claims 1 to 16 or 19, **characterised in that** the velocity at the end of the travel path is approximately zero or does not exceed a specified value.

## Revendications

1. Procédé de régulation du courant d'une bobine électromagnétique (20) qui commande la viscosité d'un liquide magnéto-rhéologique (21) d'un absorbeur d'énergie commandable (5), l'absorbeur d'énergie (5) agissant en tant qu'amortisseur entre deux parties (23, 24) mobiles l'une par rapport à l'autre le long d'une course limitée, dont la force d'amortissement est déterminée par le courant traversant la bobine électromagnétique (20), **caractérisé en ce que** les étapes suivantes sont prévues :
- la vitesse relative entre une première partie mobile (25a) de l'absorbeur d'énergie (5) et une seconde partie fixe (25b) est déterminée en continu ou à des intervalles à partir des signaux d'au moins deux capteurs d'accélération, au moins un capteur d'accélération étant placé sur la partie déplaçable (25a) et au moins un autre capteur d'accélération étant placé sur la partie au repos par rapport à celle-ci (25b) de l'absorbeur d'énergie (5) ou sur des éléments raccordés de manière appropriée à ces parties,
- l'accélération nécessaire pour le ralentissement à partir de la vitesse relative mesurée au repos à la fin de la course est calculée,
- à partir de l'accélération calculée, le courant est calculé de manière à ce que, lors du procédé ultérieur des parties mobiles l'une par rapport à l'autre (23, 24), la valeur de l'accélération soit approximativement atteinte.

2. Procédé de régulation du courant d'une bobine (20) qui commande la viscosité d'un liquide magnéto-rhéologique (21) d'un absorbeur d'énergie commandable (5), l'absorbeur d'énergie (5) agissant en tant qu'amortisseur entre deux parties (23, 24) mobiles l'une par rapport à l'autre le long d'une course limitée, dont la force d'amortissement est déterminée par le courant traversant la bobine magnétique (20), **caractérisé en ce que** les étapes suivantes sont prévues :
- la vitesse relative entre une première partie mobile (23) et une seconde partie fixe (24) est déterminée en continu ou à des intervalles à partir des signaux d'au moins deux capteurs d'accélération, au moins un capteur d'accélération étant placé sur la partie déplaçable (25a) et au moins un autre capteur d'accélération étant placé sur la partie au repos par rapport à celle-ci (25b) de l'absorbeur d'énergie (5) ou sur des éléments raccordés de manière appropriée à ces parties,
- l'évolution de vitesse nécessaire pour le ralentissement à partir de la vitesse relative mesurée au repos à la fin de la course est calculée au moins à une reprise,
- à partir de la vitesse relative déterminée et de l'évolution de vitesse calculée, le courant est calculé de manière à ce que, lors du procédé ultérieur des parties mobiles l'une par rapport à l'autre (23, 24), la valeur de la vitesse soit approximativement atteinte.

3. Procédé selon la revendication 2, **caractérisé en ce que** l'évolution de vitesse nécessaire pour le repos à la fin de la course est calculée en fonction de la course ou en fonction du temps de la course.

4. Procédé selon l'une quelconque des revendications précédentes, **caractérisé en ce que** la détermination de la vitesse relative est réalisée de manière répétée et, lors de chaque mesure, la course encore disponible est déterminée.

5. Procédé selon l'une quelconque des revendications précédentes, **caractérisé en ce que** la vitesse relative et/ou la course encore disponible sont calculées à partir des signaux d'un capteur de course (2), qui détermine la position relative des parties mobiles l'une par rapport à l'autre (25a, 25b) de l'absorbeur d'énergie.

6. Procédé selon l'une quelconque des revendications précédentes, **caractérisé en ce que** les valeurs de position, de course, de vitesse et/ou d'accélération nécessaires pour la régulation sont déterminées de manière directe ou indirecte par d'autres grandeurs physiques par au moins un capteur.

7. Procédé selon l'une quelconque des revendications précédentes, **caractérisé en ce que** la régulation du ralentissement a lieu de manière autonome, c'est-à-dire sans connexion à d'autres systèmes de ralentissement, appareils de commande ou capteurs.

8. Procédé selon l'une quelconque des revendications précédentes, **caractérisé en ce que** des paramètres connus sont connus avant et/ou pendant le ralentissement afin d'optimiser les paramètres de régulation.

9. Procédé selon l'une quelconque des revendications précédentes, **caractérisé en ce que** le régulateur communique avec d'autres systèmes de ralentissement, appareils de commande et/ou capteurs.

10. Procédé selon l'une quelconque des revendications précédentes, **caractérisé en ce que** la régulation de l'absorbeur d'énergie (5) régule le ralentissement conjointement avec d'autres systèmes de ralentissement, de manière à minimiser la sollicitation de l'unité à ralentir.

11. Procédé selon l'une quelconque des revendications précédentes, **caractérisé en ce que** moins de 1 s et moins de 100 ms s'écoulent entre la détection d'une déviation de la régulation, le calcul ultérieur et l'adaptation approximée par l'absorbeur d'énergie (5).

12. Procédé selon l'une quelconque des revendications précédentes, **caractérisé en ce qu'**une commande (100) qui peut au moins partiellement commander la force de l'absorbeur d'énergie (5) avant, pendant et/ou après l'opération de ralentissement a la priorité sur le régulateur.

13. Procédé selon l'une quelconque des revendications précédentes, **caractérisé en ce que** différents paramètres tels que des résultats de mesure ou des résultats de calcul sont stockés en interne ou en externe et peuvent être rappelés ultérieurement.

14. Procédé selon l'une quelconque des revendications précédentes, **caractérisé en ce qu'**il est utilisé pour la régulation d'un absorbeur d'énergie (5) commandable dans un véhicule automobile.

15. Procédé selon l'une quelconque des revendications précédentes, **caractérisé en ce qu'**il est utilisé dans un système de sécurité, de protection et/ou de soutien d'un véhicule automobile.

16. Procédé selon l'une quelconque des revendications précédentes, **caractérisé en ce qu'**il est utilisé pour la régulation d'un absorbeur d'énergie commandable (5) dans une suspension de siège.

17. Dispositif pour la régulation d'un absorbeur d'énergie commandable (5), comprenant une unité de cylindre à piston, par laquelle un liquide magnéto-rhéologique (21) est comprimé par une unité de cylindre à piston (25) au travers d'une ouverture étroite (22), la viscosité du liquide magnéto-rhéologique au niveau de l'ouverture étroite pouvant être modifiée par le courant traversant une bobine (20), la force d'amortissement étant ainsi ajustable, **caractérisé en ce qu'**une unité de capteur est prévue pour déterminer la position, la vitesse ou l'accélération relative de la partie déplaçable (25a) par rapport à la partie fixe (25b) de l'absorbeur d'énergie (5), au moins un capteur d'accélération étant placé sur la partie déplaçable (25a) et au moins un autre capteur d'accélération étant placé sur la partie au repos par rapport à celle-ci (25b) de l'absorbeur d'énergie (5) ou sur des éléments raccordés de manière appropriée à ces parties.

18. Dispositif selon la revendication 17, **caractérisé en ce que** l'unité de capteur pour la détermination de la position, de la vitesse ou de l'accélération relative de la partie déplaçable (25a) par rapport à la partie fixe (25b) de l'absorbeur d'énergie (5) est intégrée dans l'absorbeur d'énergie (5).

19. Procédé selon l'une quelconque des revendications 1 à 16 précédentes, **caractérisé en ce que** l'effet de perturbations telles que par exemple la température, les frottements ou la composition du liquide (21) sur la force opposée générée par l'absorbeur d'énergie (5) est compensé automatiquement par le procédé lui-même.

20. Procédé selon l'une quelconque des revendications 1 à 16 ou 19 précédentes, **caractérisé en ce que** la vitesse à la fin de la course est approximativement de zéro ou ne dépasse pas une valeur déterminée.
